(19) Europäisches Patentamt / European Patent Office / Office européen des brevets

(11) **EP 3 239 612 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(51) Int Cl.:
***F23R 3/06*** *(2006.01)*

(21) Anmeldenummer: **17167348.6**

(22) Anmeldetag: **20.04.2017**

(54) **GASTURBINENBRENNKAMMER**

GAS TURBINE COMBUSTOR

CHAMBRE DE COMBUSTION DE TURBINE À GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2016 DE 102016207057**

(43) Veröffentlichungstag der Anmeldung:
**01.11.2017 Patentblatt 2017/44**

(73) Patentinhaber: **Rolls-Royce Deutschland Ltd & Co KG**
**15827 Blankenfelde-Mahlow (DE)**

(72) Erfinder: **CLEMEN, Carsten**
**15749 Mittenwalde (DE)**

(74) Vertreter: **Hoefer & Partner Patentanwälte mbB**
**Pilgersheimer Straße 20**
**81543 München (DE)**

(56) Entgegenhaltungen:
**EP-A2- 2 189 721          WO-A1-2015/084963**
**US-A1- 2013 078 582**

**Beschreibung**

Die Erfindung bezieht sich auf eine Gasturbinenbrennkammer, insbesondere für eine Fluggasturbine.

Im Einzelnen bezieht sich die Erfindung auf eine Gasturbinenbrennkammer mit den Merkmalen des Oberbegriffs des Anspruchs 1.

Aus dem Stand der Technik sind unterschiedliche Konstruktionen von Gasturbinenbrennkammern vorbekannt, insbesondere Ringbrennkammern. Hierzu wird auf die EP 0 780 638 A2 verwiesen. Bei derartigen Gasturbinenbrennkammern wird durch Zumischöffnungen zusätzliche Luft in den Innenraum der Brennkammer geleitet, um die Verbrennung zu optimieren und um insbesondere NOx-Emissionen zu reduzieren. Ferner zeigt die US 2013/0078582 A1 eine Gasturbinenbrennkammer gemäß dem Oberbegriff des Anspruchs 1.

Bei den vorbekannten Konstruktionen steht eine vorbestimmte Luftmenge sowohl zur Kühlung der Brennkammerwände als auch zur Zumischung von Luft zur Verfügung. Daraus folgt der Nachteil, dass bei einer Steigerung der Zumischluft weniger Luft zur Kühlung der Brennkammerwände zur Verfügung steht. Aus dem Stand der Technik ist es bekannt, die Zumischlöcher zu vergrößern, um die NOx-Bildung zu minimieren und gleichzeitig die Anzahl der Kühlluftlöcher in der Brennkammerwand zu verringern oder deren Durchmesser zu verkleinern. Dies führt jedoch insgesamt zu einer schlechteren Kühlung der Brennkammerwand. Daraus wiederum folgt, dass bei den bekannten Konstruktionen eine weitere Steigerung der durch die Zumischlöcher zugeführten Luft nicht mehr möglich ist, ohne erhebliche Nachteile hinsichtlich der Kühlung der Brennkammerwand in Kauf zu nehmen.

Der Erfindung liegt die Aufgabe zugrunde, eine Gasturbinenbrennkammer der eingangs genannten Art zu schaffen, welche bei einfachem Aufbau und einfacher, kostengünstiger Herstellbarkeit sowohl eine gute Kühlung der Brennkammerwand als auch eine ausreichende Zuleitung von Zumischluft ermöglicht.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit eine Gasturbinenbrennkammer geschaffen worden, die eine doppelwandige Ausgestaltung mit einer äußeren, kalten Brennkammerwand und mit einer inneren, heißen Brennkammerwand aufweist. Der Begriff "äußere" und "innere" bezieht sich dabei auf den Brennraum und die durch die Brennkammer strömenden Gase. Die äußere Brennkammerwand ist mit Prallkühllöchern versehen, durch welche Kühlluft in einen Zwischenraum zwischen der äußeren und der inneren Brennkammerwand eintreten kann, um die äußere Seite der inneren Brennkammerwand zu kühlen. In der inneren Brennkammerwand sind Effusionskühllöcher vorgesehen, um Kühlluft durch die innere Brennkammerwand zu leiten und diese durch einen Kühlluftfilm vor den heißen Verbrennungsgasen zu schützen.

Sowohl in der äußeren Brennkammerwand als auch in der inneren Brennkammerwand sind Zumischlöcher ausgebildet, durch welche Zumischluft in den Brennraum einströmen kann. Dabei weist die äußere Brennkammerwand äußere Zumischlöcher und die innere Brennkammerwand innere Zumischlöcher auf.

Die Zumischlöcher können um den Umfang verteilt einreihig oder zweireihig ausgebildet sein. Das jeweilige äußere und innere Zumischloch werden durch ein rohrförmiges Zumischelement verbunden, durch welches die Zumischluft von der Außenseite der Brennkammer einströmen und in den Innenraum der Brennkammer in den Bereich der Verbrennungszone eingeleitet wird.

Das Zumischelement ist in seinem im Zwischenraum angeordneten Bereich mit zumindest einer Einströmöffnung versehen, durch welche Kühlluft aus dem Zwischenraum in das Zumischelement einströmen kann.

Weiterhin weist das äußere Zumischloch einen kleineren Durchmesser auf als das innere Zumischloch. Um die zusätzliche Luftmenge, die durch das Zumischelement einströmt, festzulegen, ist vorgesehen, dass die Durchströmungsfläche der an das Zumischelement angrenzenden Effusionskühllöcher um die Flächendifferenz zwischen dem äußeren Zumischloch und dem inneren Zumischloch verringert ist.

Die erfindungsgemäße Lösung sieht somit vor, eine größere Luftmenge durch die Prallkühllöcher in den Zwischenraum einzuleiten. Diese Kühlluft kühlt die innere Brennkammerwand, wird anschließend aber nicht gänzlich durch die Effusionskühllöcher in den Brennkammerinnenraum geführt, sondern wird teilweise in das Zumischelement eingeleitet, um als Zumischluft den Verbrennungsvorgang zu optimieren. Die Luftmenge, welche durch die Prallkühllöcher eingeleitet wird, bleibt somit, im Vergleich zu vorbekannten Konstruktionen, konstant. Erfindungsgemäß wird lediglich die Luftmenge, welche durch die Effusionslöcher geleitet wird, verringert. Durch die Kühlung der inneren Brennkammerwand durch die mittels der Prallkühllöcher eingeleitete Kühlluft ist eine ausreichende Kühlung der inneren Brennkammerwand sichergestellt, so dass diese keine erhöhten Wandtemperaturen aufweist. Eine unerwünschte Erwärmung der inneren Brennkammerwand wird somit verhindert. Dies führt zu einer gesteigerten Lebensdauer der inneren Brennkammerwand und verhindert, dass diese beschädigt wird, beispielsweise durch Abschmelzen oder ähnliche Vorgänge.

In besonders günstiger Weiterbildung ist vorgesehen, dass das Zumischelement in Form eines ringartigen Flansches ausgebildet ist, welcher an der inneren Brennkammerwand gelagert ist. Hierdurch ist es möglich, sowohl einstückige Konstruktionen der äußeren und inneren Brennkammerwand zu realisieren, als auch Konstruktionen, bei denen die innere Brennkammerwand unabhängig von der äußeren Brennkammerwand gefertigt ist, beispielsweise in Form von Schindeln.

Die Zumischluftlöcher, welche gleichmäßig um den Umfang der Brennkammer verteilt angeordnet sind, können einreihig oder zweireihig vorgesehen sein. Eine einreihige Ausgestaltung dürfte zu guten Ergebnissen führen.

Die Einströmöffnung, welche an dem Zumischelement vorgesehen ist, um Kühlluft aus dem Zwischenraum in das Zumischelement einzuführen, ist bevorzugterweise strömungsoptimiert ausgebildet. Sie kann rund, oval oder schlitzartig ausgestaltet sein, sie kann auch zu einer Mittelachse des Zumischelements geneigt ausgestaltet werden. Die diversen Maßnahmen führen zu optimierten Strömungsverhältnissen, abhängig von der jeweiligen Konstruktion der Gasturbinenbrennkammer. Dabei kann es besonders vorteilhaft sein, wenn die Einströmöffnung oder die mehreren Einströmöffnungen in Strömungsrichtung der Kühlluft durch den Zwischenraum angeordnet sind. Dies führt zu einer weiteren Verbesserung der Strömungsverhältnisse. Insgesamt ist es im Rahmen der Erfindung möglich, am Umfang des Zumischelements mehrere Einströmöffnungen oder nur eine singuläre große Einströmöffnung vorzusehen.

Durch die Verringerung der Anzahl der Effusionskühllöcher oder der wirksamen Durchmesser der Effusionskühllöcher kann erreicht werden, dass die Summe der Durchströmungsflächen der Prallkühllöcher und der äußeren Zumischlöcher gleich ist der Summe der Durchströmungsflächen der Effusionskühllöcher und der inneren Zumischlöcher. Dies kann sich auf einen Bereich benachbart zu den am Umfang angeordneten Zumischlöchern beziehen oder auf die gesamte Brennkammer.

Im Folgenden wird die Erfindung anhand von Ausführungsbeispielen in Verbindung mit der Zeichnung beschrieben. Dabei zeigt:

Fig. 1 ein Gasturbinentriebwerk zur Verwendung der erfindungsgemäßen Gasturbinenbrennkammer,

Fig. 2 eine vereinfachte Axialschnittansicht einer aus dem Stand der Technik bekannten Brennkammer,

Fig. 3 eine Teil-Draufsicht gemäß Fig. 2,

Fig. 4 und 5 Axial-Teilschnittansichten der äußeren und der inneren Brennkammerwand mit Zumischung gemäß dem Stand der Technik,

Fig. 6 eine Teil-Axialschnittansicht, analog Fig. 4 und 5, eines ersten Ausführungsbeispiels der Erfindung,

Fig. 7 eine Schnittansicht, analog Fig. 6, eines weiteren Ausführungsbeispiels,

Fig. 8 eine Schnittansicht, analog Fig. 6 und 7, eines zusätzlichen Ausführungsbeispiels, und

Fig. 9 Schnittansichten analog den Fig. 6 bis 8 mit Darstellung von Ausführungsbeispielen von Einströmöffnungen.

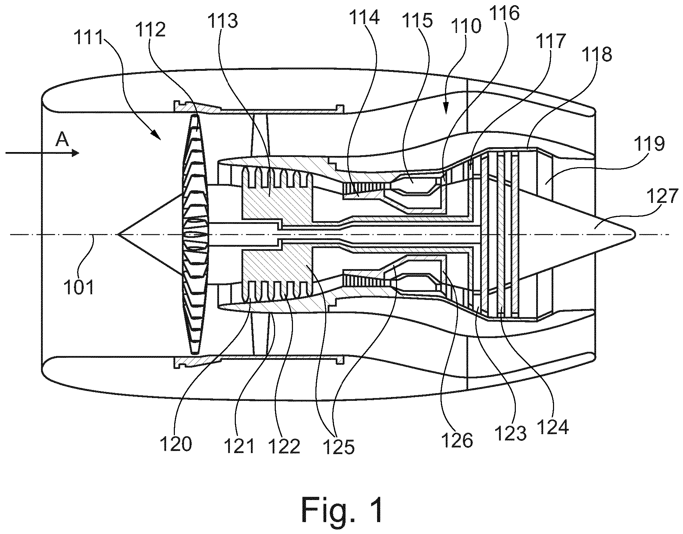

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Kerntriebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101. A zeigt die eintretende Luftströmung.

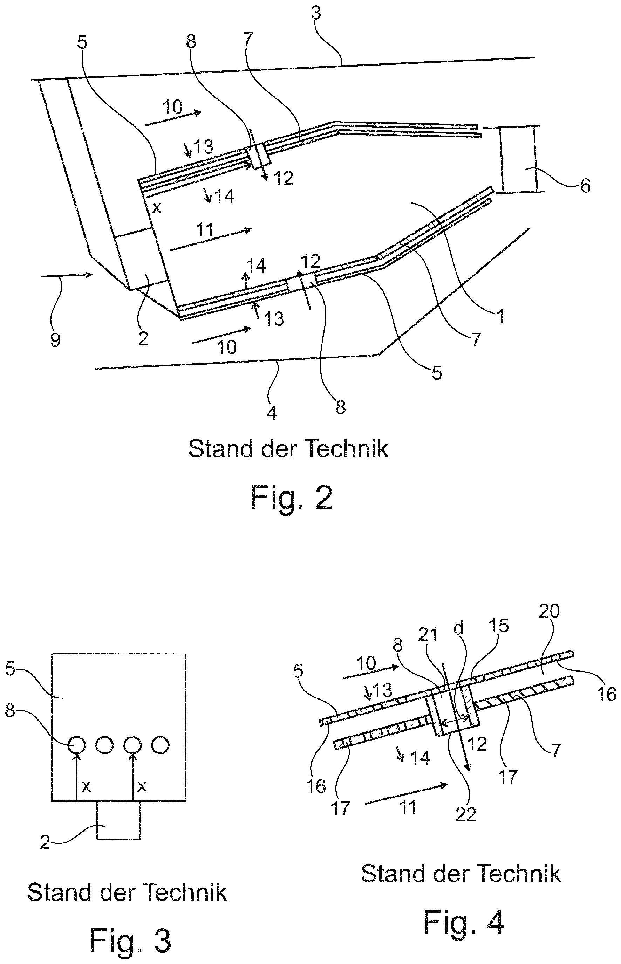

Die Fig. 2 bis 5 zeigen Konstruktionen gemäß dem Stand der Technik. Dabei ist in Fig. 2 in vereinfachter Darstellung eine Gasturbinenbrennkammer erläutert. Diese weist einen Brennraum 1 auf, welcher beim Brennvorgang von Luft 11 durchströmt wird, so wie dies in Fig. 2 dargestellt ist. Die Brennkammer weist eine Treibstoffdüse 2 auf. Das Bezugzeichen 3 zeigt ein Außengehäuse, während ein Innengehäuse mit dem Bezugszeichen 4 vereinfacht dargestellt ist. Die Brennkammer ist doppelwandig ausgebildet und umfasst eine äußere Brennkammerwand 5 sowie eine innere Brennkammerwand 7. Im Einströmbereich ist die erwähnte Treibstoffdüse 2 vorgesehen, die Ausströmung erfolgt durch ein Turbinenvorleitrad 6.

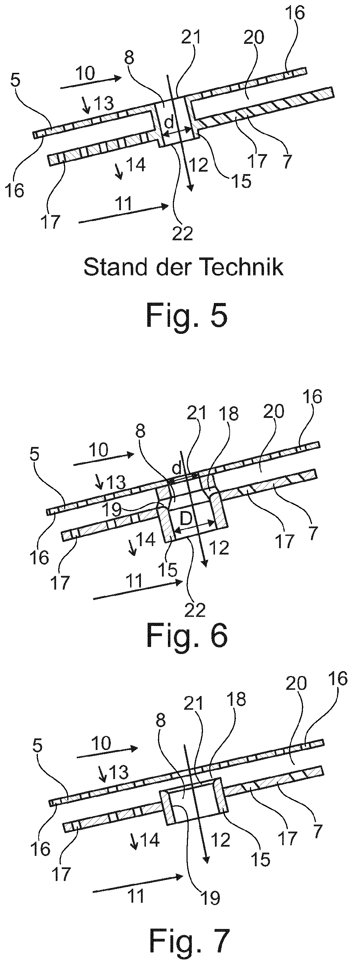

Die Brennkammer weist eine einreihige Anordnung von Zumischöffnungen auf, welche vereinfacht durch das Bezugszeichen 8 als Zumischung dargestellt ist. Die im Bereich der Treibstoffdüse 2 eintretende Luft ist mit dem Bezugszeichen 9 verdeutlicht. Die Brennkammer wird zwischen dem Außengehäuse 3 und dem Innengehäuse 4 von einer Luftströmung 10 umströmt, aus welcher Kühlluft 13 durch Prallkühllöcher 16 (s. Fig. 4 und 5) in einen Zwischenraum 20 zwischen der äußeren Brennkammerwand 5 und der inneren Brennkammerwand 7 eingeleitet wird. Zusätzlich strömt Luft 12 durch die Zumischung 8. Aus dem Zwischenraum 20 strömt Kühlluft durch Effusionskühllöcher 17 (s. Fig. 4 und 5) in den Brennraum 1.

Während die vorbekannte Brennkammer in Fig. 2 in einer Axialschnittebene dargestellt ist, zeigt die Fig. 3 eine Draufsicht auf die äußere Brennkammerwand 5. Dabei ist nochmals ersichtlich, dass die Zumischöffnungen der Zumischung 8 gleichmäßig um den Umfang verteilt einreihig ausgebildet sind. Sie weisen einen Abstand x von der Ebene der Treibstoffdüse 2 auf.

Die Fig. 4 und 5 zeigen zwei unterschiedliche grundsätzliche Ausgestaltungsmöglichkeiten der Brennkammerwände 5 und 7. Diese können als separate Bauteile ausgebildet sein, so wie dies in Fig. 4 dargestellt ist. Dabei ist ersichtlich, dass ein Zumischelement 15 an der inneren Brennkammerwand 7 befestigt oder einstückig mit dieser ausgebildet ist. Das Zumischelement 15 weist ein äußeres Zumischloch 21 und ein inneres Zumischloch 22 auf. Bei dem Ausführungsbeispiel der Fig. 5 sind die äußere Brennkammer 5, die innere Brennkammer 7 und das Zumischelement 15 einstückig ausgebildet.

Die Fig. 4 und 5 verdeutlichen, dass Kühlluft 13 durch die Prallkühllöcher 16 in den Zwischenraum 20 einströmt und dabei die Außenseite der inneren Brennkammerwand 7 kühlt. Die Kühlluft strömt anschließend durch die Effusionskühllöcher 17 in den Brennraum und bildet eine Kühlluftschicht zum Schutz der inneren Brennkammerwand 7 aus. Die Kühlluft 14 bildet somit einen Kühlluftfilm und strömt längs der Innenseite der inneren Brennkammerwand 7.

Durch das Zumischelement 5 strömt Luft 12, welche als diskrete Strahlen in den Brennraum 1 geleitet wird, um sich dort mit der Luft 11 und dem Brennstoff zu vermischen und so die Brennkammergase abzumagern. Auf diese Weise wird die NOx-Bildung minimiert. Bei der in Fig. 4 gezeigten zweiteiligen Ausgestaltung der Brennkammerwand dichtet das Zumischelement 15 zur Innenseite der äußeren Brennkammerwand 5 ab, indem es sich gegen die äußere Brennkammerwand abstützt. Bei der in Fig. 5 gezeigten einstückigen Ausgestaltung ist eine derartige Abdichtung nicht erforderlich.

Nachteilig bei den aus dem Stand der Technik bekannten Konstruktionen ist, dass bei einer Steigerung der Zumischung 8 weniger Luft durch die Prallkühllöcher 16 und die Effusionskühllöcher 17 geleitet werden kann.

Dies führt zu einer Erhöhung der Wandtemperatur aufgrund verringerter Kühlung. Hierdurch sinkt die Lebensdauer der Brennkammerwand, da diese beispielsweise schmelzen kann.

Die Fig. 6 zeigt ein Ausführungsbeispiel analog der Darstellung der Fig. 4 und 5. Dabei ist ersichtlich, dass erfindungsgemäß das äußere Zumischloch 21 des Zumischelements 15 einen geringeren Durchmesser aufweist, als das innere Zumischloch 22. Weiterhin zeigt die Fig. 6, dass zumindest im Bereich des Zumischelements 15 eine geringe Anzahl an Effusionskühllöchern 17 ausgebildet ist.

Das Zumischelement 15 weist am Umfang verteilt Einströmöffnungen 18 auf, deren Wandungen zur Strömungsoptimierung mit einem Radius 19 versehen sind.

Vergleicht man das Ausführungsbeispiel der Fig. 6 mit der aus dem Stand der Technik bekannten Konstruktion gemäß Fig. 4, so ergibt sich folgendes: Zur nachfolgenden Betrachtung wird die Luftmenge [g/s] durch die Prallkühllöcher 16 mit x, die Luftmenge [g/s] durch die Effusionskühllöcher 17 mit x und die Fläche der Effusionskühllöcher 17 mit X bezeichnet. Die Luftmenge [g/s] durch die Zumischung 8 wird mit y bezeichnet. Der Innendurchmesser der Zumischung 8 [mm] ist d. Die Fläche der Zumischmenge 8 [mm$^2$] beträgt $0{,}25 * \pi * d^2$.

Vergleicht man die Fig. 4 und 6, so ergibt sich, dass bei der vorliegenden Erfindung eine zusätzliche Luftmenge a zusätzlich durch die Zumischung 8 eingeleitet und durch das innere Zumischloch 22 ausgeleitet wird. Diese zusätzliche Zumischluft kann beliebig festgelegt werden, realistische Werte liegen bei 0,1 bis 0,4. Um diesen Faktor wird somit die Luftmenge, welche durch das innere Zumischloch 22 ausströmt, im Gegensatz zu der Luftmenge, die durch das äußere Zumischloch 21 einströmt, erhöht. Geht man von einem beispielhaften Durchmesser von d = 10 mm aus, so ist die Luftmenge durch die Prallkühllöcher 16 mit x angegeben und die Luftmenge durch die Effusionskühllöcher 17 mit (1-a)*x definiert. Die Fläche der Effusionskühllöcher 17 beträgt demnach (1-a)*X. Durch das äußere Zumischloch 21 wird eine Luftmenge [g/s] von y eingeleitet, während durch die Einströmöffnungen 18 eine Luftmenge [g/s] von a*x zugeführt wird. Die Gesamtluftmenge, welche durch das innere Zumischloch 22 ausströmt, beträgt somit y+a*x. Mit einem Durchmesser d des äußeren Zumischlochs 21 ergibt sich ein Fläche des äußeren Zumischlochs 21 [mm$^2$] von $0{,}25 * \pi * d^2$.

Die Fläche des inneren Zumischlochs 22 beträgt $0{,}25 * \pi * d^2 * (1+a)$. Der Durchmesser D des inneren Zumischlochs 22 beträgt $D = d^* \sqrt{1+a}$. Bei dem Beispiel, bei welchem d = 10 mm und a = 0,2 betragen, ergibt sich somit D = 10,95 mm. Erfindungsgemäß liegen bevorzugte Werte von D/d zwischen 1,05 und 1,2.

Die Fig. 7 zeigt ein Ausführungsbeispiel, bei welchem die Einströmöffnung 18 als Ring ausgebildet ist, in dem das Zumischelement 15 einen Abstand zu der äußeren Brennkammerwand 5 aufweist.

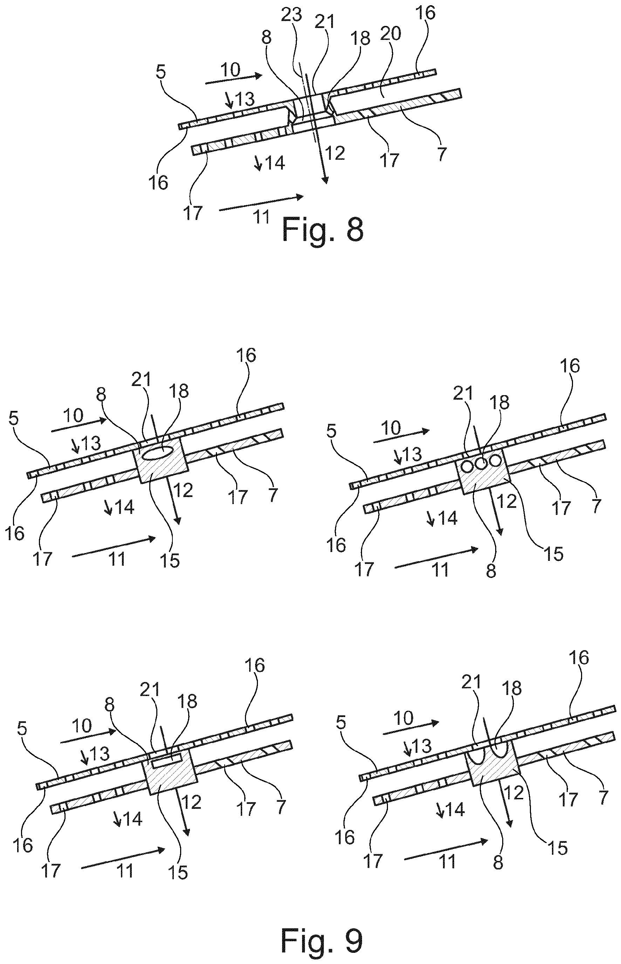

Die Fig. 8 zeigt ein Ausführungsbeispiel, bei welchem eine Mittelachse 23 der Zumischöffnung 8 dargestellt ist. Die Einströmöffnungen 18 sind dabei zu der Mittelachse 23 geneigt, um die Strömungsverhältnisse zu optimieren.

Die Fig. 6 bis 8 zeigen, dass insgesamt weniger Effusionskühllöcher 17 im Bereich der Zumischung 18 ausgebildet sind, verglichen mit dem Stand der Technik gemäß Fig. 4.

Die Fig. 9 zeigt unterschiedliche Ausgestaltungsvarianten der Einströmöffnungen 18. Gemäß der Variante links oben in Fig. 9 ist eine Einströmöffnung 18 mit ovalem Querschnitt vorgesehen, während das Ausführungsbeispiel der Fig. 9 rechts oben mehrere kreisrunde Einströmöffnungen 18 vorsieht. Die Variante links unten gemäß Fig. 9 zeigt eine schlitzartige Ausgestaltung der Einströmöffnung 18, während die Variante unten rechts gemäß Fig. 9 halbkreisförmige oder halbovale Einströmöffnungen 18 aufweist.

Die Einströmöffnung 18 oder die mehreren Einströmöffnungen 18 sind bevorzugterweise so angeordnet, dass sie in Richtung der Strömung 11 orientiert sind. Hierdurch wird sichergestellt, dass die in dem Zwischenraum 20 strömende Kühlluft effektiv und ungehindert in das Zumischelement 15 eintreten kann.

Erfindungsgemäß können die Zumischöffnungen 8 einreihig oder mehrreihig ausgebildet sein. Bei einer mehrreihigen Ausgestaltung ändern sich die Durchmesser- und Flächenverhältnisse analog.

Bezuaszeichenliste:

| | |
|---|---|
| 1 | Brennraum |
| 2 | Treibstoffdüse |
| 3 | Außengehäuse |
| 4 | Innengehäuse |
| 5 | äußere Brennkammerwand |
| 6 | Turbinenvorleitrad |
| 7 | innere Brennkammerwand |
| 8 | Zumischung/Zumischöffnung |
| 9-12 | Luft |
| 13, 14 | Kühlluft |
| 15 | Zumischelement |
| 16 | Prallkühlloch |
| 17 | Effusionskühlloch |
| 18 | Einströmöffnung |
| 19 | Radius |
| 20 | Zwischenraum |
| 21 | äußeres Zumischloch |
| 22 | inneres Zumischloch |
| 23 | Mittelachse |
| 101 | Triebwerksmittelachse |
| 110 | Gasturbinentriebwerk / Kerntriebwerk |
| 111 | Lufteinlass |
| 112 | Fan |
| 113 | Mitteldruckkompressor (Verdichter) |
| 114 | Hochdruckkompressor |
| 115 | Brennkammer |
| 116 | Hochdruckturbine |
| 117 | Mitteldruckturbine |
| 118 | Niederdruckturbine |
| 119 | Abgasdüse |
| 120 | Leitschaufeln |
| 121 | Kerntriebwerksgehäuse |
| 122 | Kompressorlaufschaufeln |
| 123 | Leitschaufeln |
| 124 | Turbinenschaufeln |
| 125 | Kompressortrommel oder -scheibe |
| 126 | Turbinenrotornabe |
| 127 | Auslasskonus |

**Patentansprüche**

1. Gasturbinenbrennkammer mit einer doppelwandigen Ausgestaltung mit

   - einer äußeren, kalten Brennkammerwand (5) und mit einer inneren, heißen Brennkammerwand (7), welche einen Zwischenraum (20) bilden,
   - mit in der äußeren Brennkammerwand (5) ausgebildeten Prallkühllöchern (16),
   - mit in der inneren Brennkammerwand (7) ausgebildeten Effusionskühllöchern (17),
   - mit in der äußeren Brennkammerwand (5) ausgebildeten äußeren Zumischlöchern (21),
   - mit in der inneren Brennkammerwand (7) ausgebildeten inneren Zumischlöchern (22),
   - mit jeweils einem das äußere Zumischloch (21) und das innere Zumischloch (22) verbindenden rohrförmigen Zumischelement (15), und
   - wobei das Zumischelement (15) in seinem im Zwischenraum (20) angeordneten Bereich mit zumindest einer Einströmöffnung (18) versehen ist,
   - wobei das äußere Zumischloch (21) einen kleineren Durchmesser aufweist, als das innere Zumischloch (22), und

   **dadurch gekennzeichnet,**

   - **dass** die Durchströmungsfläche der an das Zumischelement (15) angrenzenden Effusionslöcher (17) um die Flächendifferenz zwischen dem äußeren Zumischloch (21) und dem inneren Zumischloch (22) verringert ist.

2. Gasturbinenbrennkammer nach Anspruch 1, **dadurch gekennzeichnet, dass** das Zumischelement (15) in Form eines ringartigen Flansches ausgebildet ist, welches an der inneren Brennkammerwand (7) gelagert ist.

3. Gasturbinenbrennkammer nach Anspruch 1 oder 2, **dadurch gekennzeichnet, dass** die Zumischlöcher (21, 22) jeweils einreihig um den Umfang der äußeren Brennkammerwand (5) und der inneren Brennkammerwand (7) angeordnet sind.

4. Gasturbinenbrennkammer nach einem der Ansprüche 1 bis 3, **dadurch gekennzeichnet, dass** die Einströmöffnung (18) strömungsoptimiert ausgebildet ist.

5. Gasturbinenbrennkammer nach Anspruch 4, **dadurch gekennzeichnet, dass** die Einströmöffnung (18) rund oder oval ausgebildet ist.

6. Gasturbinenbrennkammer nach einem der Ansprüche 4 oder 5, **dadurch gekennzeichnet, dass** die Einströmöffnung (18) zu einer Mittelachse (23) des Zumischelements (5) geneigt ausgebildet ist.

7. Gasturbinenbrennkammer nach einem der Ansprüche 1 bis 6, **dadurch gekennzeichnet, dass** die Einströmöffnung (18) in Strömungsrichtung der Kühlluft durch den Zwischenraum (20) angeordnet ist.

8. Gasturbinenbrennkammer nach einem der Ansprüche 1 bis 7, **dadurch gekennzeichnet, dass** am Umfang des Zumischelements (15) mehrere Einströmöffnungen (18) ausgebildet sind.

9. Gasturbinenbrennkammer nach einem der Ansprüche 1 bis 8, **dadurch gekennzeichnet, dass** die Einströmöffnungen (18) schlitzartig ausgebildet sind.

10. Gasturbinenbrennkammer nach einem der Ansprüche 1 bis 9, **dadurch gekennzeichnet, dass** die Summe der Durchströmungsflächen der Prallkühllöcher (16) und der äußeren Zumischlöcher (21) gleich ist der Summe der Durchströmungsflächen der Effusionskühllöcher (17) und der inneren Zumischlöcher (22).

**Claims**

1. Gas-turbine combustion chamber having a double-wall design

   - with an outer, cold combustion chamber wall (5) and with an inner, hot combustion chamber wall (7) forming an intermediate space (20),
   - with impingement cooling holes (16) embodied in the outer combustion chamber wall (5),
   - with effusion cooling holes (17) embodied in the inner combustion chamber wall (7),
   - with outer admixing holes (21) embodied in the outer combustion chamber wall (5),
   - with inner admixing holes (22) embodied in the inner combustion chamber wall (7),
   - with respectively one tubular admixing element (15) connecting the outer admixing hole (21) and the inner admixing hole (22), and
   - wherein the admixing element (15) in its area arranged in the intermediate space (20) is provided with at least one inflow opening (18),
   - wherein the outer admixing hole (21) has a smaller diameter than the inner admixing hole (22), and

   **characterized in that**

   - the through-flow surface area of the effusion cooling holes (17) adjoining the admixing element (15) is reduced by the difference in surface area between the outer admixing hole (21) and the inner admixing hole (22).

2. Gas-turbine combustion chamber in accordance with Claim 1, **characterized in that** the admixing element (15), which is mounted on the inner combustion chamber wall (7), is designed in the form of an annular flange.

3. Gas-turbine combustion chamber in accordance with Claim 1 or 2, **characterized in that** the admixing holes (21, 22) are respectively arranged in one row around the circumference of the outer combustion chamber wall (5) and of the inner combustion chamber wall (7).

4. Gas-turbine combustion chamber in accordance with one of the Claims 1 to 3, **characterized in that** the inflow opening (18) is of a flow-optimized design.

5. Gas-turbine combustion chamber in accordance with Claim 4, **characterized in that** the inflow opening (18) is of round or oval design.

6. Gas-turbine combustion chamber in accordance with one of the Claims 4 or 5, **characterized in that** the inflow opening (18) is designed inclined relative to a center axis (23) of the admixing element (5).

7. Gas-turbine combustion chamber in accordance with one of the Claims 1 to 6, **characterized in that** the inflow opening (18) is arranged in the flow direction of the cooling air through the intermediate space (20).

8. Gas-turbine combustion chamber in accordance with one of the Claims 1 to 7, **characterized in that** several inflow openings (18) are provided on the circumference of the admixing element (15).

**9.** Gas-turbine combustion chamber in accordance with one of the Claims 1 to 8, **characterized in that** the inflow openings (18) are of a slot-type design.

**10.** Gas-turbine combustion chamber in accordance with one of the Claims 1 to 9, **characterized in that** the sum of the through-flow surface areas of the impingement cooling holes (16) and the outer admixing holes (21) equals the sum of the through-flow surface areas of the effusion cooling holes (17) and the inner admixing holes (22).

**Revendications**

**1.** Chambre de combustion de turbine à gaz avec une conception à double paroi

- avec une paroi extérieure, froide de la chambre de combustion (5) et une paroi intérieure, chaude de la chambre de combustion (7) qui forment un espace intermédiaire (20),
- avec des trous de refroidissement par impact (16) constitués dans la paroi extérieure de la chambre de combustion (5),
- avec des trous de refroidissement par effusion (17) constitués dans la paroi intérieure de la chambre de combustion (7),
- avec des trous de mélange extérieurs (21) constitués dans la paroi extérieure de la chambre de combustion (5),
- avec des trous de mélange intérieurs (22) constitués dans la paroi intérieure de la chambre de combustion (7),
- avec respectivement un élément de mélange (15) de forme tubulaire reliant le trou de mélange extérieur (21) et le trou de mélange intérieur (22), et
- sachant que l'élément de mélange (15) est pourvu, au niveau de sa zone disposée dans l'espace intermédiaire (20), d'au moins une ouverture d'admission (18),
- sachant que le trou de mélange extérieur (21) présente un plus petit diamètre que le trou de mélange intérieur (22), et

**caractérisée en ce que**

- la section d'écoulement des trous de refroidissement par effusion (17) avoisinant l'élément de mélange (15) est diminuée de la différence de section existant entre le trou de mélange extérieur (21) et le trou de mélange intérieur (22).

**2.** Chambre de combustion de turbine à gaz selon la revendication n° 1, **caractérisée en ce que** l'élément de mélange (15) est conçu sous forme de bride annulaire et est monté sur la paroi intérieure de la chambre de combustion (7).

**3.** Chambre de combustion de turbine à gaz selon la revendication n° 1 ou n° 2, **caractérisée en ce que** les trous de mélange (21, 22) sont disposés respectivement sur une rangée autour de la circonférence de la paroi extérieure de la chambre de combustion (5) et de la paroi intérieure de la chambre de combustion (7).

**4.** Chambre de combustion de turbine à gaz selon une des revendications n° 1 à n° 3, **caractérisée en ce que** l'ouverture d'admission (18) est optimisée pour l'écoulement.

**5.** Chambre de combustion de turbine à gaz selon la revendication n° 4, **caractérisée en ce que** l'ouverture d'admission (18) est conçue de façon ronde ou ovale.

**6.** Chambre de combustion de turbine à gaz selon une des revendications n° 4 ou n° 5, **caractérisée en ce que** l'ouverture d'admission (18) est inclinée par rapport à un axe central (23) de l'élément de mélange (5).

**7.** Chambre de combustion de turbine à gaz selon une des revendications n° 1 à n° 6, **caractérisée en ce que** l'ouverture d'admission (18) est disposée dans le sens d'écoulement de l'air de refroidissement à travers l'espace intermédiaire (20).

**8.** Chambre de combustion de turbine à gaz selon une des revendications n° 1 à n° 7, **caractérisée en ce que** plusieurs ouvertures d'admission (18) sont constituées sur la circonférence de l'élément de mélange (15).

**9.** Chambre de combustion de turbine à gaz selon une des revendications n° 1 à n° 8, **caractérisée en ce que** les ouvertures d'admission (18) sont conçues sous forme de fente.

**10.** Chambre de combustion de turbine à gaz selon une des revendications n° 1 à n° 9, **caractérisée en ce que** la somme des sections d'écoulement des trous de refroidissement par impact (16) et des trous de mélange extérieurs (21) est égale à la somme des sections d'écoulement des trous de refroidissement par effusion (17) et des trous de mélange intérieurs (22).

Fig. 1

Stand der Technik

## Fig. 2

Stand der Technik

## Fig. 3

Stand der Technik

## Fig. 4

Stand der Technik

Fig. 5

Fig. 6

Fig. 7

**Fig. 8**

**Fig. 9**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0780638 A2
- US 20130078582 A1